Europäisches Patentamt

(19) European Patent Office

Office européen des brevets

(11) Publication number: 0 152 226
A1

## (12) EUROPEAN PATENT APPLICATION

(21) Application number: 85300604.7

(22) Date of filing: 30.01.85

(51) Int. Cl.⁴: G 01 F 1/34
G 01 F 15/18, G 01 L 19/00

(30) Priority: 03.02.84 GB 8402985

(43) Date of publication of application:
21.08.85 Bulletin 85/34

(84) Designated Contracting States:
BE DE GB IT NL SE

(71) Applicant: Fluid Devices Limited
16, Brook Gardens
Kingston-Upon-Thames Surrey(GB)

(72) Inventor: Larner, Donald Alexander
16, Brook Gardens
Kingston-upon-Thames Surrey, KT2 7ET(GB)

(74) Representative: White, Martin David et al,
Marks & Clerk 57/60 Lincoln's Inn Fields
London WC2A 3LS(GB)

(54) Measuring and indication fluid pressure and flow rate in a pneumatic or hydraulic system.

(57) For occasional measurements of fluid pressure and temperature and flow-rate in a pneumatic or hydraulic system, a sensor 1 is permanently installed in the system for a hand-held readout module 6 to be occasionally connected to it. More particularly, flexible pressure tubes 4 and 5 can be connected by quick-acting fluid couplings at 2 and 3 to pressure tappings in sensor 1, to apply differential pressure to a gauge 7 and full system pressure to a gauge 9, whilst a temperature capillary tube 14 connects a temperature gauge 8 to a sensing bulb applied at 18 to the sensor body.

EP 0 152 226 A1

0152226

M&C FOLIO: 799P47642                    WANGDOC: 0023f

"MEASURING AND INDICATING FLUID PRESSURE AND FLOW RATE
IN A PNEUMATIC OR HYDRAULIC SYSTEM"

This invention relates to apparatus for obtaining a
measurement and an indication of fluid pressure and rate
of fluid flow in a pneumatic or hydraulic fluid system.

Known prior art consists of US 4 108 008, DE 2 727
602, WO 83/02004 and US 4 109 536.  Reference is also
made to FR 2 544 071, published 12 October 1984.

US 4 108 008 (Jowett et al) is only marginally
relevant, disclosing apparatus for making quick
fluid/electrical connections of test equipment to a
vehicle.

DE 2 727 602 (Offenlegungsschrift – Gould Inc.) is
equivalent to US 4 092 865 (Strybel), which is only
marginally relevant, disclosing fluid-test apparatus
including a manifold, a plurality of gauges and hose
connections.

WO 83/02004 (Rosemount Inc.) is likewise only marginally relevant, disclosing apparatus for conveying fluid pressure to a differential pressure transducer.

US 4 109 536 (Strybel) is similar to US 4 092 865 discussed above.

FR 2 544 071 (Et. A Desbordes SA) - published 12 October 1984, discloses a differential pressure measuring device comprising a differential pressure pick-up having two inlets short-circuited by a bypass containing a valve. Two probes, terminating at the pressure pick-up inlets, are connected to two adapters which can be connected to two pressure intakes. The valve, when open, provides a much smaller pressure drop than the two adapters.

According to the present invention there is provided an apparatus for obtaining a measurement and an indication of fluid pressure and rate of fluid flow in a pneumatic or hydraulic fluid system, comprising a sensor permanently installed in the system and producing a rate-of-flow-dependent pressure differential between two points, the sensor including two connectors for making fluidic connections to the sensor at the two points, and a hand-held readout module which is provided with two pressure tubes including means adapted for coupling the two tubes and hence the readout module to the two connectors for applying total system pressure and the pressure differential to the readout module, the readout module including a pressure gauge or electrical pressure transducer and display means for measuring and indicating the total system pressure and a differential pressure gauge or electrical pressure differential transducer and display means for measuring and providing an indicaton of the pressure differential or rate of fluid flow.

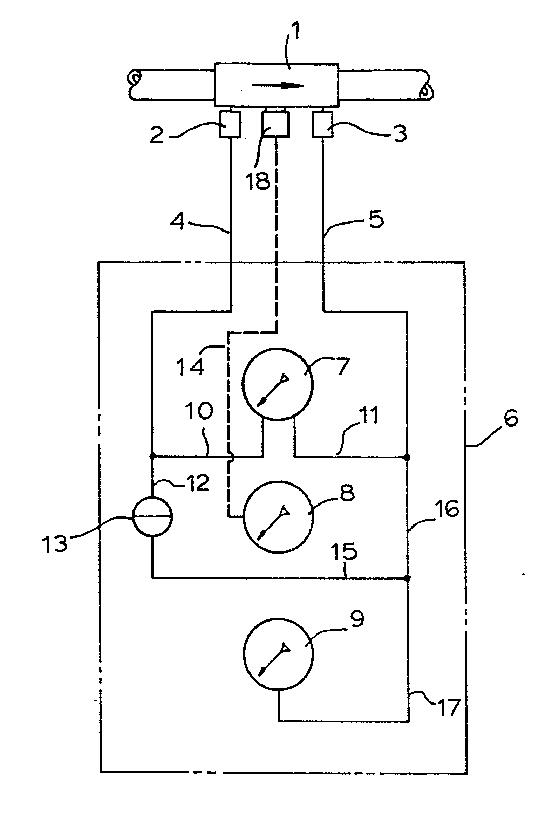

The present invention will be described by way of example with reference to the accompanying drawing.

The drawing is a schematic circuit diagram of preferred apparatus embodying the invention.

Referring to the drawing, a pneumatic or hydraulic fluid system has permanently installed therein a sensor 1 as described and illustrated in European patent application No. 84301353.3 and United States patent application Serial No. 585 144, incorporated herein by reference. The sensor 1 produces a rate-of-flow-dependent pressure differential between two points and includes two self-sealing quick acting connectors, indicated diagrammatically at 2 and 3, for quickly making pressure-tapping connections to the sensor 1 at those two points.

A hand-held readout module 6 comprises a box-like enclosure provided with two, preferably flexible, small-bore pressure tubes 4 and 5, including means adapted for coupling the two tubes 4 and 5, and hence the readout module 6, to the two connectors at 2 and 3 respectively, for applying total system pressure and also the pressure differential to the readout module 6. The point corresponding to the connector at 2 is upstream of that corresponding to the connector at 3, flow in the system being left-to-right in the drawing, so that pressure in tube 4 is higher than the pressure in tube 5.

The readout module 6 comprises a differential pressure gauge 7, a fluid temperature-indicating gauge 8 and a full system pressure gauge 9. Extensions 10 and 11 of tubes 4 and 5 respectively lead to the differential pressure gauge 7. A further extension 12 of the "upstream pressure" tube 4 leads through a simple 'on/off' by-pass valve 13 to connect with "downstream pressure" tube 5 via passages 15 and 16. An extension passage 17 connects the "downstream pressure" tube 5 with the simple pressure gauge 9. The temperature measuring and indicating gauge 8 connects via a thermometer capillary tube 14 to an associated sensing element which is affixed to the sensor body by a suitable quick-acting fixing 18.

The differential pressure gauge 7 is as described and illustrated in European patent application NO. 84301354.1 and United States patent application Serial No. 585 143, incorporated herein by reference.

The readout module 6 as a whole is connected to the flow sensor 1 by means of the two small-bore, preferably flexible, pressure tubes or hoses 4 and 5, together with the thermometer capillary tube 14, the sensor being permanently installed in the main fluid system. The pressure tubes 4 and 5 couple to the differential pressure tappings provided at 2 and 3 respectively in the sensor 1, whereas the thermometer capillary tube 14 connects to and terminates at a suitably proportioned and sized temperature sensing element at 18 such as a gas or liquid filled bulb or capsule; the capsule is held temporarily in contact with a part of the body of the flow sensor 1 by suitable temporary fixing means so that it responds to the temperature of the body and transmits a measure of the body temperature via the capillary tube 14 to the thermometer indicating gauge 8 contained in the readout module 6. It is known that such a measurement of the body temperature can be
interpreted to give a reasonably reliable indication of
the fluid temperature within it from time to time.
Contact between the sensing bulb or capsule and the
sensor body may be either at the outer surface of said
body or wholly or partially within a suitably prepared
cavity or pocket therein. Alternatively, the
temperature sensing element may be attached to a
separate body or pipe not forming a direct part of the
sensor body if preferred.

The flow passages 10, 11 provided within the
enclosure apply the differential pressure conducted from
the pressure tappings at 2, 3 of the flow sensor 1 by
the said pressure tubes 4, 5 to the appropriate
connections on the differential pressure gauge 7 to
provide a measure of the flow passing through the flow
sensor from time to time; one of the differential
pressure components (namely, the lower component via
tube 5) from the flow sensor 1 is also applied to the
simple pressure gauge 9 via extension 17 to provide a
measure of the base pressure existing in the fluid
system. A by-pass flow passage is further provided by
extensions 12 and 16 - from tube 4 and from extension 16
of tube 5 respectively - in combination with by-pass
valve 13. This by-pass flow passage directly connects
the two sensor tappings at 2 and 3 through their
respective connecting tubes 4 and 5 when required, upon opening of valve 13, so that fluid by-passes the differential pressure gauge 7 and flows, under the impulsion of the pressure differential generated by the flow of main system fluid through the sensor 1, through the said connecting tubes 4 and 5 and through the associated fluid passages contained in the enclosure, thus purging the system of any foreign inclusions of liquid or gas; the fluid 'on/off' by-pass valve 13 is accessible to the operator of the equipment whereby he can permit or prohibit by-pass flow at will.

The by-pass valve 13 is shown in its closed or 'measuring' mode; purging is therefore not taking place but flow and pressure readings are being displayed by gauges 7 and 9 respectively; relevant temperature readings are displayed by gauge 8 for as long as the temperature sensing element is properly retained at the sensor body and are not affected by the positioning of valve 13.

When valve 13 is opened to its 'purge' mode, scavenging flow of main system fluid from the sensor 1 takes place; at this time the readings of gauges 7 and 9 would be affected to some degree because of pressure drops induced by the scavenging flow and their readings should therefore be ignored.

For occasional inspection of the performance of the main fluid system, the two pressure tubes 4, 5 from the module 6 are brought into temporary connection with the pressure tappings at 2 and 3 of the flow sensor 1 by means of the quick-acting couplings, which are of known type, located at the free ends of the tubes 4, 5 and at the tapping ports of the sensor 1. The temperature sensing element at the end of its permanently connected capillary tube 14 is engaged with the sensor body at its chosen location and retained by means of a suitable quick-acting fixing means (not shown) of mechanical or magnetic type, for instance.

In use, the operator connects the module 6 to the sensor 1 in the manner explained above and then opens the by-pass valve 13 to purge the connecting tubes 4, 5 and all relevant passages in the module 6. After a suitable period of time he closes the by-pass valve 13 and then is able to take reliable readings of pressure and flow from the two pressure responsive gauges 7 and 9 which are appropriately calibrated for the purpose. In due course the temperature reading on gauge 8 will stabilize as the temperature of the sensing capsule equalizes by thermal transfer with that of the sensor 1, at which point in time the fluid temperature reading may also be taken.

In a possible modificaton, a relatively small metering orifice of known characteristics is substituted for the by-pass valve 13, so that a relatively small flow of fluid is permitted to flow through the connecting tubes 4, 5 and module passages for as long as the module is connected to the sensor. Naturally, the rate of by-pass flow will vary from time to time depending on the differential pressure generated by the flow sensor 1 but, provided such by-pass flow is small enough in relation to the bore sizes of the connecting tubes 4, 5 and module passages, no material or unaccountable distortions of flow or pressure readings will occur and purging of the measuring system will be continuous and automatic without conscious action on the part of the operator.

In another modification, not shown, the system is laid out and piped generally as shown in the drawing but suitable electrical pressure transducers are substituted for gauges 7 and 9, and the thermometer instrument 8 together with its associated capillary tube and sensing bulb is dispensed with in favour of a suitable thermocouple or resistance thermometer or the like, which is attached to the sensor body by quick coupling means as at 18; in this arrangement capillary tube 14 is replaced by a similarly routed pair of conducting wires; alternatively the thermocouple or equivalent thermo-electrical sensing element may be permanently installed on or in the sensor body and connection of the wiring to the readout module effected by a suitable quick-acting electrical connector affixed to the body.

In this modification the module enclosure will preferably in addition to the simple pressure transducer and differential pressure transducer already referred to, contain a suitable electrical power source such as a battery or batteries, together with electrical or electronic detection, amplification and display apparatus of analogue and/or digital type or types. In this arrangement measurements of pressure, flow and temperature may be displayed, singly or simultaneously by means of analogue meters or by the use of solid-state liquid crystal displays of digital or analogue type; in addition, the electrical means may be extended in its scope to allow calculations to be made of derived values, such as power and quantity from the values detected by the transducers. Moreover, actuation of the by-pass valve 13 may also, by suitable linkage, actuate electrical switching means to inhibit the display of those variables not appropriate to each functional position of the valve; in addition, the by-pass valve could be integrated by its means of actuation with a multiposition electrical selector switch controlling a large number of modes of operation of the equipment. The transducers and associated electrical or electronic equipment referred to above form part of a large body of known art and need not be further described.

There may be a plurality of sensors like the sensor 1 installed in different places in the pneumatic or hydraulic system for the readout module 6 to be connected to each in turn, or to some of them in turn, as desired, to monitor fluid pressure, temperature and flow rate at the various places in turn.

CLAIMS:-

1.     Apparatus for obtaining a measurement and an indication of fluid pressure and rate of fluid flow in a pneumatic or hydraulic fluid system, comprising a sensor (1) permanently installed in the system and producing a rate-of-flow-dependent pressure differential between two points, the sensor including two connectors (2, 3) for making fluidic connections to the sensor (1) at the two points, and a hand-held readout module (6) which is provided with two pressure tubes (4, 5) including means adapted for coupling the two tubes (4, 5) and hence the readout module (6) to the two connectors (2, 3) for applying total system pressure and the pressure differential to the readout module (6), the readout module (6) including a pressure gauge (9) or electrical pressure transducer and display means for measuring and indicating the total system pressure and a differential pressure gauge (7) or electrical pressure differential transducer and display means for measuring and providing an indication of the pressure differential or rate of fluid flow.

2.     Apparatus as claimed in claim 1 wherein the two connectors (2, 3) are self-sealing, so that connections thereto of the pressure tubes (4, 5) can be made and disconnected at will under full system pressure without substantial fluid loss.

3.      Apparatus as claimed in claim 1 or 2 and further comprising temperature-responsive means (8, 14) for disconnectably connecting the readout module (6) to the sensor (1) to sense fluid temperature at the sensor (1) and provide an indication thereof at the readout module (6).

4.      Apparatus as claimed in Claim 3 wherein said temperature-responsive means (8, 14) comprises a sensing bulb/capsule in contact with the sensor (1) and a capillary tube (14) connecting the sensing bulb/capsule to the readout module (6).

5.      Apparatus as claimed in any preceding claim and further comprising by-pass means (12, 13, 15, 16) in the readout module (6) for inter-connecting the two connectors (2,3) via the two pressure tubes (4,5) whereby the pressure tubes (4,5) and the readout module (6) can be purged.

6.      Apparatus as claimed in claim 5 wherein the by-pass means (12, 13, 15, 16) can be selectively opened and closed.

7.      Apparatus as claimed in claim 5 wherein the by-pass means (12, 15, 16) comprises a metering orifice.

**European Patent Office**

## EUROPEAN SEARCH REPORT

### DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | US-A-4 108 008 (JOWETT et al.) * Figures; abstract; column 1, lines 12-47; column 1, line 54 - column 2, line 22; column 3, lines 55-66; column 4, lines 9-47 * | 1-3 | G 01 F 1/34 G 01 F 15/18 G 01 L 19/00 |
| P,X | FR-A-2 544 071 (GENTIAL) * Figures; abstract; page 1, lines 9-15; page 2, lines 19-30 * | 1,5,6 | |
| A | DE-A-2 727 602 (STRYBEL) * Figures; page 5, paragraph 1 * | 1 | |
| A | WO-A-8 302 004 (FRICK) * Figures; page 4, line 1 - page 5, line 2 * | 1 | |
| A | US-A-3 768 511 (BIAS) * Figures * | 1 | TECHNICAL FIELDS SEARCHED (Int. Cl.4) G 01 F G 01 L |

The present search report has been drawn up for all claims

| Place of search THE HAGUE | Date of completion of the search 08-05-1985 | Examiner NUIJTEN E.M. |
|---|---|---|